# EUROPEAN PATENT SPECIFICATION

(11) **EP 1 389 579 B1**
(45) Date of publication and mention of the grant of the patent: **15.04.2009**
(21) Application number: 03018401.4
(22) Date of filing: 13.08.2003
(51) Int. Cl.: B62M 7/12, B62J 6/18, B62K 25/28

(54) **Rear arm for two-wheelers and two-wheeler**
Hinterradschwinge für Zweirad und Zweirad
Bras oscillant pour deux-roues et deux-roues

(30) Priority: 13.08.2002 JP 2002235750
(43) Date of publication of application: 18.02.2004
(73) Proprietor: Yamaha Hatsudoki Kabushiki Kaisha, Iwata-shi, Shizuoka-ken (JP)
(72) Inventor: Fukuda, Hiromi, Iwata-shi, Shizuoka-ken (JP)
(74) Representative: Grünecker, Kinkeldey, Stockmair & Schwanhäusser Anwaltssozietät

(56) References cited:
- EP-A- 1 270 395
- DE-A- 19 753 047
- US-B1- 6 199 651
- PATENT ABSTRACTS OF JAPAN vol. 1999, no. 05, 31 May 1999 (1999-05-31) & JP 11 034965 A (HONDA MOTOR CO LTD), 9 February 1999 (1999-02-09)

## Description

The present invention relates to a rear arm for two-wheelers, the rear arm being pivotally connectable at a front end side thereof to a main frame of the two-wheeler, in which a rear wheel is drivable by a rotating electrical machine being mounted to a rear end side of the rear arm. Further, the invention relates to a two-wheeler.

A conventional two-wheeler, a rear wheel of which is driven by an internal combustion engine (engine), is provided on a main frame thereof with the internal combustion engine.

Also, such conventional two-wheelers comprise a rear arm, a front end side of which is pivotally supported on a main frame of the two-wheeler, and a rear end side of which extends rearward to support thereon a rear wheel rotatably. In addition, the reason why the rear arm is pivotally supported is to make the rear wheel easy to follow, for example, roughness of the road surface during traveling of the two-wheeler.

A speed change mechanism is connected to and provided on an output shaft of the internal combustion engine, and motive power for driving the rear wheel is transmitted to a rotating shaft of the rear wheel through a motive power transmission member (for example, roller chain) from an output shaft of the speed change mechanism.

Hereupon, with two-wheelers, in which in place of an internal combustion engine, a rotating electrical machine provided in the vicinity (a rear end side of a rear arm) of a rear wheel and disposed inside the rear arm is used to drive a rear wheel, there is a need for a wiring for connection of a battery provided on a main frame of the two-wheeler and the rotating electrical machine, in place of the roller chain.

In addition, the rotating electrical machine functions as an electric motor when the two-wheeler begins traveling and when it increases (accelerates) in speed, and functions as a generator for converting kinetic energy of the two-wheeler into electric energy when the two-wheeler decelerates. When the rotating electrical machine functions as a generator, electric energy generated by the rotating electrical machine is stored in a battery of the two-wheeler.

Also, the reason why the battery is provided on the main frame is that the battery has a large mass and so is desirably provided near a center of the two-wheeler in order to reduce the moment of inertia about the center of the two-wheeler to ensure a stable traveling. Further, the reason why the rotating electrical machine is provided inside the rear arm is to cover the rotating electrical machine with the rear arm to protect the same to prevent, for example, a small stone or the like from striking against the rotating electrical machine during traveling of the two-wheeler to damage the rotating electrical machine.

It is required in the two-wheeler that the wiring for connection between the battery provided in a portion of the main frame, for example, below the saddle and outside the rear arm and the power unit provided inside the rear arm and in a rear end side of the rear arm, that is, between the battery and the rotating electrical machine, be extended through the through-hole provided in the rear arm.

In addition, the power unit serves for drivingly controlling the rotating electrical machine, and is provided inside the rear arm and in the vicinity of the rotating electrical machine. The reason why the power unit is provided in the vicinity of the rotating electrical machine is to shorten the wiring from the power unit to the rotating electrical machine as far as possible in the same manner as for the rotating electrical machine to reduce loss of energy, with which the power unit drivingly controls the rotating electrical machine, as far as possible. The reason why the power unit is provided inside the rear arm is to cover the power unit with the rear arm to protect the same to prevent, for example, a small stone or the like from striking against the power unit during traveling of the two-wheeler to damage the power unit.

Hereupon, with the two-wheeler, a coupler used to detachably connect the wiring, which extends between the battery and the power unit, to the battery is provided on one end (one end toward the battery) of the wiring, and the coupler is made larger in outer diameter than the wiring.

Accordingly, in the case where after the power unit is mounted in the rear arm, the wiring extending from the power unit is passed through the through-hole to be connected to the battery, the coupler must be able to pass through the through-hole, and so there is caused a problem that wiring between the battery and the power unit cannot be facilitated unless an inner diameter of the through-hole is made larger than an outer diameter of the coupler.

In this manner, the rear arm is in some cases decreased in rigidity when a large through-hole is formed in the rear arm.

Also, as described above, when the rotating electrical machine functions as an electric motor, the wiring permits electric power to be fed to the power unit from the battery, and when the rotating electrical machine functions as a generator, the wiring permits electric power to be fed to the battery from the power unit, in either cases a large electric current is in some cases made to flow when the rotating electrical machine changes momentum of the two-wheeler.

Accordingly, it is necessary to increase an outer diameter of conductors (for example, copper wire) in the wiring, and when conductors are made large in outer diameter, the wiring is decreased in durability to bending.

Also, when the wiring is passed through the through-hole provided in the vicinity of the power unit to extend outside the rear arm from inside in order that the wiring be connected to the power unit provided inside the rear arm and in the rear end side thereof, a distance between a pivotal portion and the through-hole is made large since the front end side (a side opposed to a side, on which the power unit is provided) of the rear arm is pivotally (swingably) supported on the main frame of the two-wheeler, and so an amount of swinging of the through-hole is increased when the rear arm turns.

Accordingly, the wiring passing through the through-hole involves a problem that as its portion passing through the through-hole swings, the substantially whole wiring swings much.

And since the wiring is low in durability to bending, it is susceptible to damage as described above when it swings much as the rear arm swings.

Also, since the power unit for drivingly controlling the rotating electrical machine is provided inside the rear arm and in the vicinity of the rotating electrical machine, any ribs for reinforcement of the rear arm cannot be provided inside the rear arm, in which the power unit is provided, and so there is caused a problem that that portion of the rear arm, in which the power unit is provided, is insufficient in rigidity.

Also, it is conceivable to provide ribs outside the rear arm in order to compensate for insufficient rigidity of the rear arm, but the provision of ribs outside brings about the possibility that such ribs protrude outside the two-wheeler to get in the way, and a favorable configuration of an outward appearance of the two-wheeler is marred, that is, attractiveness of the two-wheeler as a finished product is worsened.

US-B1-6199651 according to the preamble of claim 1 discloses a swing arm at the rear side of a scooter being pivotably connected at the front end side thereof to a scooter body The swing arm houses an electric motor for driving a rear wheel being mounted at the rear end side of the swing arm. The swing arm is divided into a swing arm frame and a cover. The swing arm frame includes an opening through which cables pass through to connect the battery to the electric motor.

It is an object of the present invention to provide a rear arm for two-wheelers capable of reinforcing rigidity of the rear arm.

This object is solved by the features of claim 1.

According to a preferred embodiment, the through hole is provided in the vicinity of an axis of turning on the front end side of the rear arm In an upward oriented manner when the rear arm of the two-wheeler is mounted on the two-wheeler.

Moreover, a grommet is provided on the opening protecting the varing and filling up a gap provided between the wiring and the opening.

Further, the rear end side of the rear arm is divided into a plurality of constituent members. ,

Moreover, the rear end side of the rear arm is divided into a member extending lengthwise from the front end side to the rear end side and a member extending at the rear end side of the rear arm only, wherein the respective members are joined together to reinforce the rear end side of the rear arm.

For a two-wheeler, this object is solved by a two-wheeler comprising a main frame with a front wheel being turnably connected thereto and a rear arm extending towards a rear wheel from the main frame and comprising the features of at least one of the above embodiments of the rear arm.

Further preferred embodiments are subject to the subclaims.

In the following, the invention will be described in greater detail by means of a preferred embodiment along with the accompanying drawings, wherein:
- Fig. 1: is a view of a whole two-wheeler showing an outline of a constitution of the two-wheeler according to an embodiment of the invention;
- Fig. 2: is a view showing an outline of a constitution of the two-wheeler around a rear arm;
- Fig. 3: is a view showing an outline of a constitution of a main stand;
- Fig. 4: is a view taken along the IVA - IVB in Fig. 3;
- Fig. 5: is a view taken along the VA - VB in Fig. 2;
- Fig. 6: is a view showing an intermediate portion of the rear arm in the longitudinal direction when viewed from a opposite side to a side in Fig. 2; and
- Fig. 7: is a perspective view showing an outline of a constitution of the rear arm.

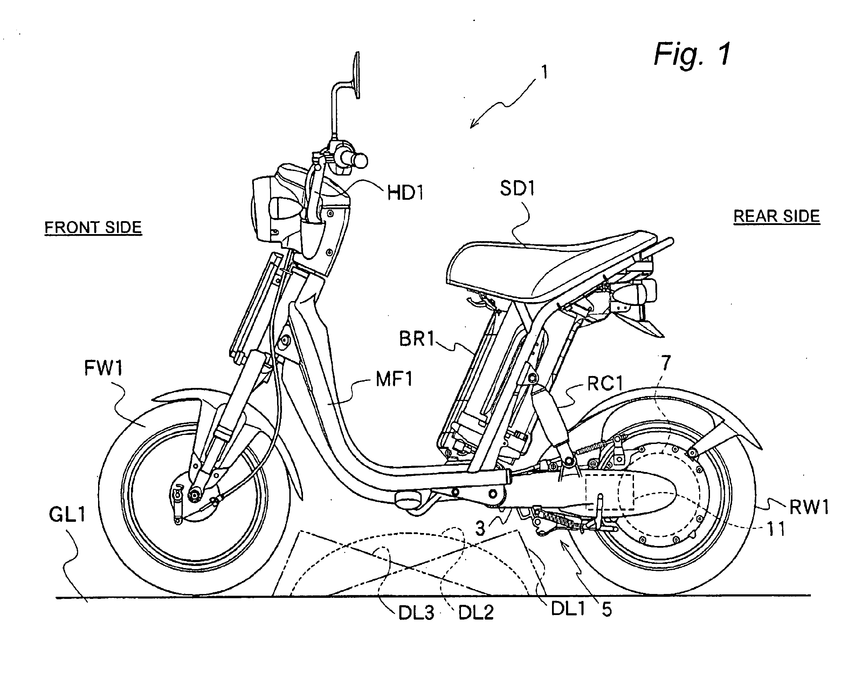

Fig. 1 is a view of a whole two-wheeler 1 showing an outline of a constitution of the two-wheeler 1 according to an embodiment of the invention.

A rotating electrical machine 7 drives a rear wheel RW1 to thereby have the two-wheeler 1 travel, the two-wheeler 1 being provided with a main frame MF1, which constitutes a body of the two-wheeler 1, the main frame MF1 pivotally supporting a handlebar HD1 on a front end side thereof, and a front wheel FW1 being supported on a lower side of the handlebar HD1 to be rotatable relative to the handlebar HD1.

A saddle SD1, on which a rider of the two-wheeler 1 seats, is provided on an upper side of a rear end of the main frame MF1, and a battery BR1 serving as a power supply for supplying electric power to the rotating electrical machine 7 is provided on a lower side of the saddle SD1 to be supported on the main frame MF1.

A rear arm 3 is pivotally (swingably) supported on a lower side of the rear end of the main frame MF1, and a rear wheel RW1 is rotatably supported on a rear end side of the rear arm 3.

One end side of a rear cushion RC1 is pivotally supported on an intermediate portion of the rear arm 3 in a longitudinal direction (front-rear direction) and on an upper side of the rear arm 3, and the other end side of a rear cushion RC1 is pivotally supported on the main frame MF1 below the saddle SD1.

Also, provided on a lower side of the two-wheeler 1 and on an intermediate portion of the two-wheeler 1 in a front-rear direction is a main stand 5 used to make the two-wheeler 1 stand up in a substantially horizontal state in a crosswise direction when the two-wheeler 1 stops.

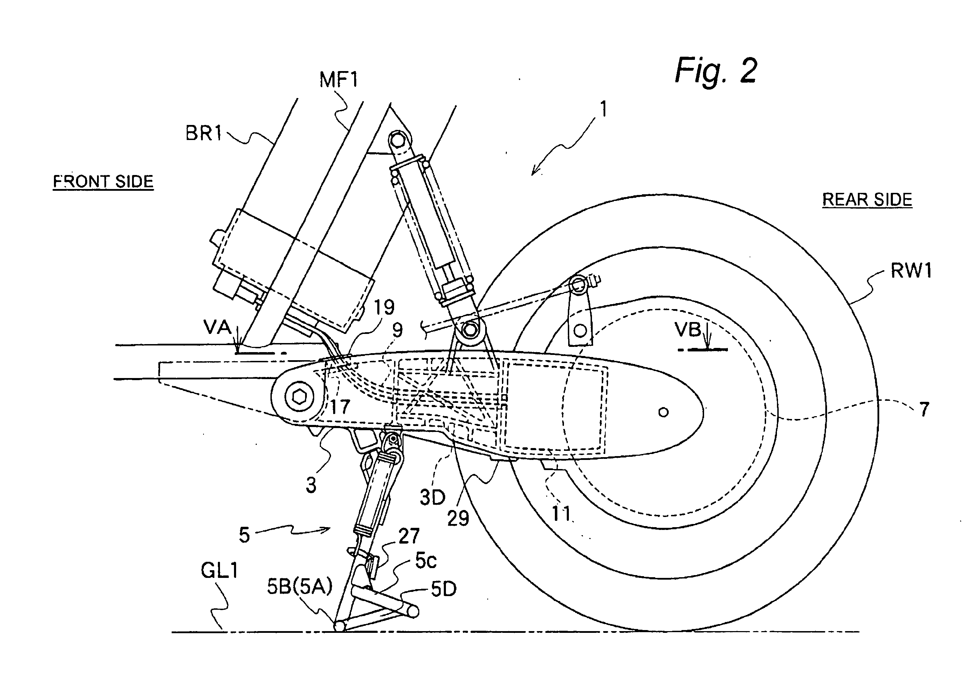

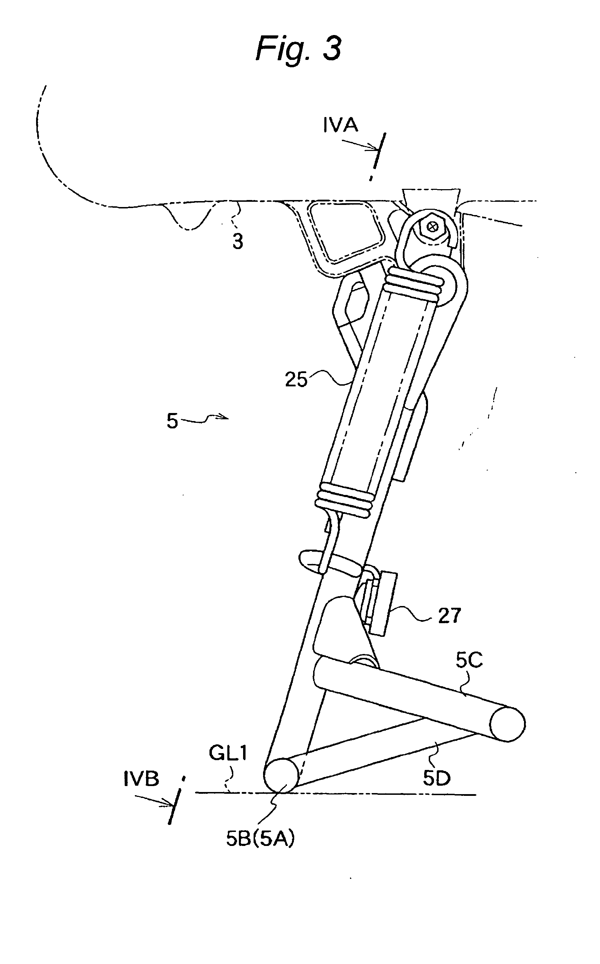

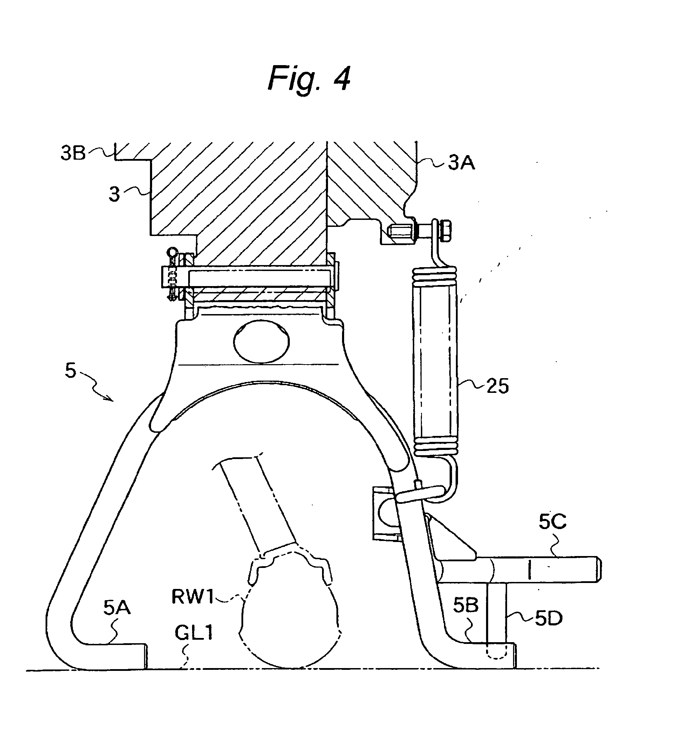

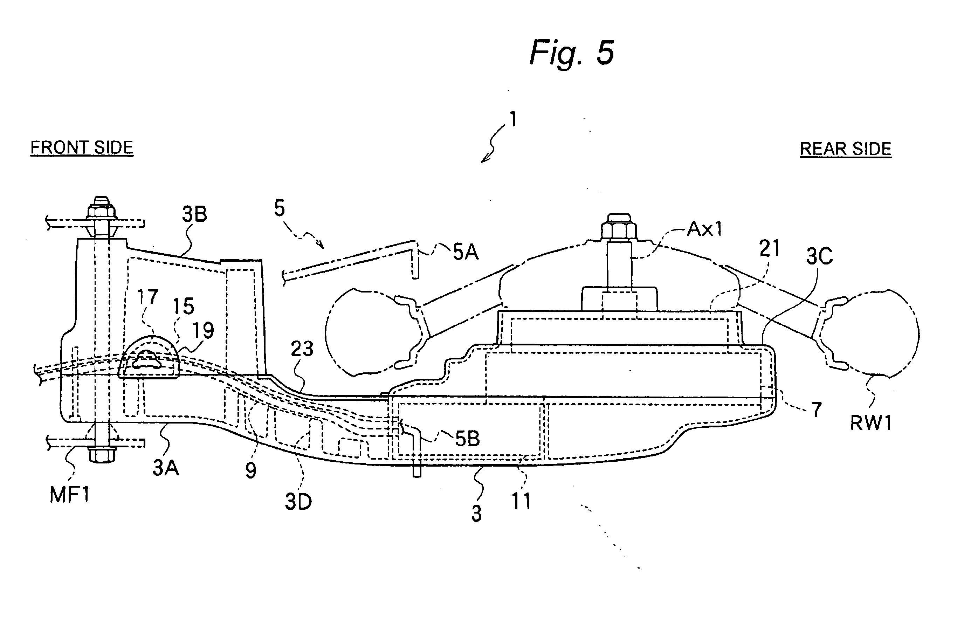

Fig. 2 is a view showing an outline of a constitution of the two-wheeler 1 around the rear arm 3, Fig. 3 is a view showing an outline of a constitution of the main stand 5, Fig. 4 is a view taken along the IVA - IVB in Fig. 3, and Fig. 5 is a view taken along the VA - VA in Fig. 2.

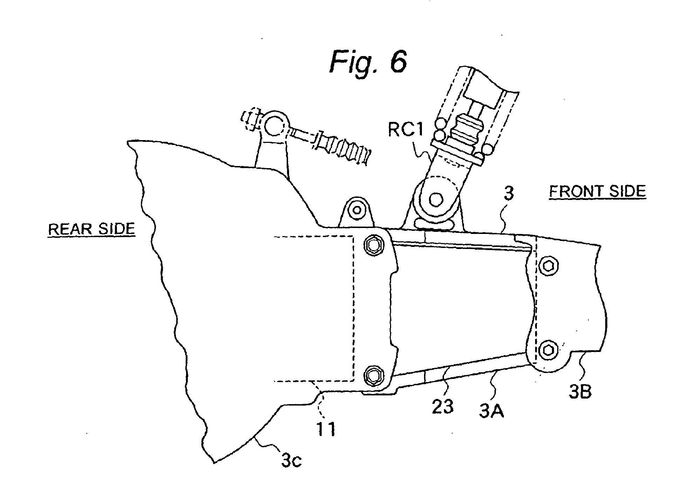

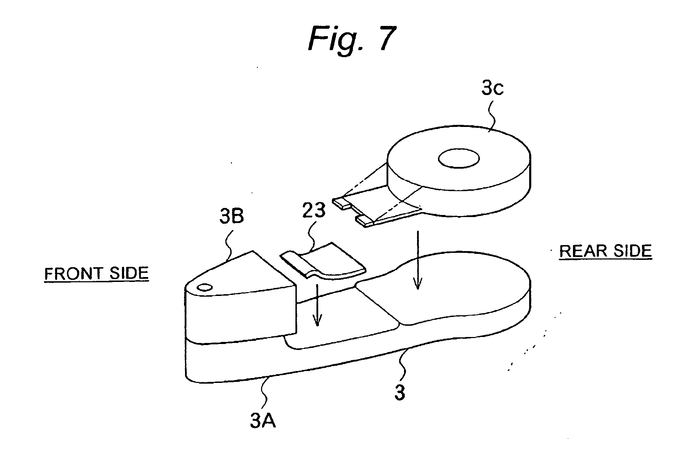

Fig. 6 is a view showing the intermediate portion of the rear arm 3 in the longitudinal direction when viewed from a opposite side to a side in Fig. 2, and Fig. 7 is a perspective view showing an outline of a constitution of the rear arm 3.

In addition, the main stand 5 shown in Figs. 1 and 5 is in a lifted state, that is, a state, in which grounding portions of the main stand 5 are separated from a road surface GL1 to have the two-wheeler 1 travel, and the main stand 5 shown in Figs. 2 to 4 is in a lowered state, that is, a state, in which the grounding portions of the main stand 5 are brought into contact with the road surface GL1 to have the two-wheeler 1 stand up in a stoppage state.

The main stand 5 is provided on the rear arm 3 of the two-wheeler 1, the rear wheel RW1 of which is drivingly rotated by the rotating electrical machine 7 (see Fig. 5) provided on one end side, for example, leftwardly (leftward in a traveling direction of the two-wheeler 1) of a rotating shaft AX1 of the rear wheel RW1, and provided on right and left sides thereof with the grounding portions 5A, 5B. And respective tip ends of the both grounding portions 5A, 5B are configured to be bent toward a side, on which the rotating electrical machine 7 is positioned (see Figs. 4 and 5).

Here, described in further detail, the forked tip ends of the main stand 5 branch rightwardly and leftwardly of the two-wheeler 1, and the respective tip ends branching rightwardly and leftwardly form the respective grounding portions 5A, 5B. The main stand 5 is supported on a base end side opposed to a side (forked side) of the respective grounding portions of the main stand 5 to be tumable (swingable) relative to the rear arm 3 about an axis of turning substantially parallel to an axis of rotation of the rear wheel RW1. In addition, the axis of turning is located on the intermediate portion of the rear arm 3 in the longitudinal direction and on a lower side of the rear arm 3. Also, the main stand 5 may be mounted on the main frame MF1 to be turnable.

The grounding portion 5A is disposed on a side (rightward in the traveling direction of the two-wheeler in Fig. 5) of the rear wheel RW1 opposed to a side, on which the rotating electrical machine 7 is provided, and the grounding portion 5B is disposed on a side (leftward in the traveling direction of the two-wheeler in Fig. 5) of the rear wheel RW1, on which the rotating electrical machine 7 is provided.

And the tip end of the grounding portion 5A is bent inwardly (leftward in the traveling direction of the two-wheeler 1) of the two-wheeler 1, and the tip end of the grounding portion 5B is bent outwardly (leftward in the traveling direction of the two-wheeler 1) of the two-wheeler 1.

With the main stand 5, the rotating electrical machine 7 is provided in the vicinity of and leftwardly of the rear wheel RW1 and the rear arm 3 rotatably supporting the rear wheel RW1 on a rear end thereof is disposed on a side, on which the rotating electrical machine 7 is provided, to extend toward a rear side, on which the rear wheel RW1 is supported, from the main frame MF1, whereby the respective grounding portions 5A, 5B of the main stand 5 can be located in substantially symmetrical positions with respect to the center of gravity of the two-wheeler in the crosswise direction even when a crosswise location of the center of gravity of the two-wheeler 1 is moved to a side, on which the rotating electrical machine 7 and the rear arm 3 are provided, since the tip ends of the respective grounding portions 5A, 5B of the main stand 5 are bent toward the rotating electrical machine 7 to define the respective grounding portions.

In the case where the respective grounding portions 5A, 5B of the main stand 5 are present in substantially symmetrical positions with respect to the center of gravity of the two-wheeler in the crosswise direction, the two-wheeler 1 is made favorably stable in the crosswise direction when the main stand 5 is used to stand up the two-wheeler 1.

Also, even when the main stand 5 is used to stand up the two-wheeler 1 on a soft ground (road surface), there is a less possibility that either of the respective grounding portions 5A, 5B sinks into the soft ground to make the two-wheeler 1 incline, since loads on the respective grounding portions 5A, 5B become substantially equal to each other.

Also, with the main stand 5, in the case where the two-wheeler 1 is caused to travel with the main stand 5 lifted, the tip end of the grounding portion 5A present on a side without the rotating electrical machine 7 and the rear arm 3 is bent inside of the two-wheeler 1, so that although the rear wheel RW1 is driven by the rotating electrical machine 7 to remove any muffler from the two-wheeler 1, the situation, in which only the grounding portion 5A present on a side without the rotating electrical machine 7 and the rear arm 3 protrudes laterally (rightwardly) of the two-wheeler 1 on a lower side of the two-wheeler 1, is not brought about to make the grounding portion 5A hard to contact with obstacles such as grass, trees, or the like.

In addition, in the case where the rotating electrical machine 7 is provided on one end side rightwardly (rightward in the traveling direction of the two-wheeler 1) of the rotating shaft AX1 of the rear wheel RW1, and the rear arm 3 is also correspondingly provided on one end side rightwardly of the rotating shaft AX1 of the rear wheel RW1, it suffices that the respective grounding portions 5A, 5B of the main stand 5 be bent toward a side, on which the rotating electrical machine 7 is provided. That is, it suffices that the grounding portion 5A be bent rightward in the traveling direction of the two-wheeler 1 and the grounding portion 5B be bent leftward in the traveling direction of the two-wheeler 1.

Also, with the main stand 5, a foot bar 5C, on which a rider puts a foot when the two-wheeler 1 is made to stand up, is provided in a position toward a base end of the main stand 5 away from the grounding portion (for example, the grounding portion 5B on the two-wheeler 1), which is bent laterally toward the rotating electrical machine 7 to provide a tip end bent outwardly of the two-wheeler 1, among the both grounding portions 5A, 5B, as shown in Figs. 2 to 4.

That is, a base end of the foot bar 5C is fixed to an intermediate portion (intermediate portion between the base end of the main stand 5 and the grounding portion) of the main stand 5 toward the grounding portion 5B, and a tip end of the foot bar is extended in the same lateral direction as that, in which the grounding portion 5B is extended. Further, for example, a columnar-shaped obstacle member 5D for preventing entry of a rider's foot is provided between a tip end side of the grounding portion 5B bent outwardly of the two-wheeler 1 and the foot bar 5C.

With the main stand 5, the provision of the foot bar 5C makes it possible to easily stand up the two-wheeler 1 and the obstacle member 5D for preventing entry of a rider's foot is provided between the tip end side of the grounding portion 5B and the foot bar 5C, so that it is possible to avoid the possibility that a rider's foot is erroneously interposed between the foot bar 5C and the road surface GL1 when the two-wheeler 1 is caused to stand up.

In addition, the main stand 5 can be adopted not only for the two-wheeler 1 driven by the rotating electrical machine 7 but also for other two-wheelers driven by an actuator such as internal combustion engines or the like.

Here, the rear wheel RW1 is mounted on the main frame MF1 of the two-wheeler 1 driven by the rotating electrical machine 7, the rear arm 3 of the two-wheeler 1 pivotally supported at a front end side thereof mounts the rotating electrical machine 7 on a rear end side thereof, and the front end of the rear arm 3 is divided into two constituent members 3A, 3B in, for example, the crosswise direction of the two-wheeler 1. And an opening 17 for passage therethrough of a wiring 9 for electric connection of the battery BR1 provided on the main frame MF1 to serve as a power supply and the rotating electrical machine 7 is formed on the rear arm 3 (see Figs. 2 and 5) by providing a notch on at least one of the respective constituent members 3A, 3B.

That is, the front end of the rear arm 3 engages with the main frame MF1 on a lower side of the rear end of the main frame MF1 of the two-wheeler 1, and the rear arm 3 is supported on the main frame MF1 to be turnable about an axis of tuming substantially parallel to an axis of the rotating shaft AX1 of the rear wheel RW1.

The rear arm 3 rotatably supports the rear wheel RW1 on a rear end thereof, the rotating electrical machine 7 for drivingly rotating the rear wheel RW1 is provided on the rear end and inside the rear arm 3, and a power unit 11 for drivingly controlling the rotating electrical machine 7 is provided in the vicinity of the rotating electrical machine 7 and inside the rear arm 3.

Also, the rear arm 3 is divided at the front end thereof into separate members, that is, the constituent member 3A, which extends lengthwise from the front end to the rear end of the rear arm 3 to constitute the rear arm 3, and the constituent member 3B, which constitutes the rear arm 3 at the rear end. And the constituent member 3B is unitarily fixed to the constituent member 3A by means of, for example, fasteners such as bolts or the like.

In addition, the constituent member 3A comprises a space therein and an opening toward the constituent member 3B, and the constituent member 3B comprises a space therein and an opening toward the constituent member 3A. And the constituent member 3B is fixed to the constituent member 3A whereby the respective openings of the respective constituent members 3A, 3B close each other, and a space in the rear arm 3 is substantially separated at the front end of the rear arm 3 from outside by the constituent member 3A and the constituent member 3B.

Also, a notch 15 is provided on the constituent member 3B at the division of the constituent member 3A and the constituent member 3B as shown in Fig. 5. That is, the notch 15 is provided on that outer wall of the constituent member 3B, which is joined to the constituent member 3A. And the constituent member 3B is fixed to the constituent member 3A, whereby the notch 15 forms at the front end of the rear arm 3 a through-hole (opening) 17 extending from a space defined inside the rear arm 3 to outside of the rear arm 3.

In addition, instead of providing the notch 15 on the constituent member 3B, the notch may be provided on the constituent member 3A or both of the constituent members 3A, 3B. That is, it suffices that the notch be provided on at least one of the constituent members 3A, 3B. Also, the rear arm 3 may be divided at the front end of the rear arm 3 into three or more constituent members.

And the wiring 9 for electric connection of the battery BR1 provided on the main frame MF1 of the two-wheeler 1 to serve as a power supply and the rotating electrical machine 7 passes through the through-hole 17 (see Fig. 5). In addition, the wiring 9 in the two-wheeler 1 connects the battery BR1 to the power unit 11 for drivingly controlling the rotating electrical machine 7.

Subsequently, an explanation will be given to the case where the wiring 9 connects the power unit 11 and the battery BR1 to each other.

In a state, in which the constituent members 3A, 3B are separated from each other, the power unit 11 is mounted in the constituent member 3A of the rear arm 3, thereafter the wiring 9 is extended to the front end of the rear arm 3 (the constituent member 3A) within the constituent member 3A to be extended outside the constituent member 3A in a predetermined position toward the front end, thereafter the notch 15 formed on the constituent member 3B is made coincident with the position, in which the wiring 9 is extended outside the constituent member 3A, and the constituent member 3B is fixed to the constituent member 3A.

With such wiring, even when a coupler for detachably connecting the wiring 9 to the battery BR1 is made larger in outer diameter than the wiring 9, there is no need of passing the coupler through the through-hole 17 formed by the notch 15 and even when an inner diameter of the through-hole 17 (the notch 15) is made smaller than the outer diameter of the coupler, wiring from the power unit 11 to the battery BR1 can be easily performed. However, it is necessary to make the inner diameter of the through-hole 17 (the notch 15) slightly larger than the outer diameter of the wiring 9.

In this manner, the rear arm 3 can be prevented as much as possible from being decreased in rigidity since there is no need of forming a large through-hole for passing the wiring 9 through the rear arm 3.

Also, the through-hole 17 is provided on the rear arm 3 to be close to the axis of turning toward the front end of the rear arm 3, and disposed upward when the rear arm 3 is mounted on the two-wheeler 1.

Provided about the through-hole 17 as shown in Figs. 2 and 5 is a grommet 19 for protecting the wiring 9 and filling up a gap generated between the wiring 9 and the through-hole 17. In addition, the grommet 19 comprises a plate-shaped member made of an elastic material such as rubber or the like to have a predetermined thickness and an outward appearance having substantially the same shape as that of the through-hole 17, the plate-shaped member being provided centrally thereof with a through-hole, through which the wiring 9 is extended.

In this manner, when the grommet 19 is provided on the through-hole 17, the wiring 9 is prevented from contacting directly with an inner periphery of the through-hole 17, thus eliminating the possibility that the wiring 9 is caused upon swinging of the rear arm 3 to rub against the inner periphery of the through-hole 17 to be damaged.

Also, since the grommet 19 fills up the gap generated between the wiring 9 and the through-hole 17, moisture and dust are made hard to enter into the rear arm 3 from the through-hole 17.

Further, the wiring 9 extends in the rear arm 3 from the power unit 11 to the through-hole 17, and passes through the through-hole 17 provided on an upper side of the rear arm 3 to extend outside the rear arm 3 to be connected to the battery BR1, that is, a portion of the wiring 9 extending outside the rear arm 3 is small in length, so that even when, for example, a small stone or the like is flipped from the road surface during traveling of the two-wheeler 1, such small stone or the like is made hard to contact with the wiring 9, thus enabling preventing damage to the wiring 9 as far as possible.

In addition, in the case where the grommet 19 is provided, it is desired that the wiring 9 provided with no coupler be extended through the through-hole of the grommet 19 and then the coupler be mounted.

Also, a rear end side of the rear arm 3 (a side, on which the rear wheel RW1 is rotatably supported) is divided into the constituent member 3A and the constituent member 3C, for example, in the crosswise direction of the two-wheeler. And the respective constituent members 3A, 3C are joined together to thereby provide for reinforcement for the rear end side of the rear arm 3 (see Fig. 5).

Here, the constituent member 3A comprises therein a space and an opening toward the constituent member 3C, and the constituent member 3C comprises therein a space and an opening toward the constituent member 3A. And the constituent member 3C is unitarily fixed to the constituent member 3A as by fasteners such as bolts or the like, whereby the respective openings of the respective constituent members 3A, 3C are closed by each other, and the constituent members 3A, 3C substantially separate the inner space of the rear arm 3 from outside on the rear end side of the rear arm 3.

In this manner, the rotating electrical machine 7 for driving the rear wheel RW1 is provided in a space provided inside the rear end side of the rear arm 3. In addition, an axis of an output shaft of the rotating electrical machine 7 and the axis of the rotating shaft AX1 of the rear wheel RW1 are substantially coaxial with each other. Also, the output shaft of the rotating electrical machine 7 and the rotating shaft AX1 of the rear wheel RW1 are interconnected to each other through, for example, a speed reducer 21 constituted by planetary gear reduction gears.

Also, the power unit 11 is provided in the constituent member 3A of the rear arm 3 to be close to a position, in which the rotating electrical machine 7 is provided. Accordingly, it is difficult to provide ribs, which increases rigidity of the constituent member 3A of the rear arm 3, inside the constituent member 3A, in which the power unit 11 is provided.

Hereupon, with the rear arm 3, in order to reinforce the portion of the constituent member 3A, in which the power unit 11 is provided, the constituent member 3C is unitarily fixed to the constituent member 3A in the rear end side of the rear arm 3 including the portion of the constituent member 3A, in which the power unit 11 is provided, thus reinforcing the portion of the constituent member 3A, in which the power unit 11 is provided.

Accordingly, the constituent member 3A can be reinforced only by fixing of the constituent member 3C, so that there is no need of providing separate ribs for reinforcement outside the constituent member 3A whereby an outward appearance is made neat and attractiveness of the two-wheeler 1 is made favorable in outward appearance.

Also, with the two-wheeler 1, the wiring 9, through which electric power is fed to the rotating electrical machine 7 (the power unit 11) from the battery BR1, enters inside the rear arm 3 from outside in a position, in which an amount of extension and contraction of the wiring 9 becomes as small as possible when the rear arm 3 turns.

For example, the position, in which the wiring 9 enters inside the rear arm 3 from outside, is close to the axis of turning on the front end side of the rear arm 3, and disposed on the upper side of the rear arm 3.

Accordingly, even when the rear arm 3 turns relative to the main frame MF1 during traveling of the two-wheeler 1, swinging of the through-hole 17 provided on the rear arm 3 is small and swinging of the wiring 9 passing through the through-hole 17 is also small.

And when swinging of the wiring 9 is small, the possibility that the wiring 9 is damaged due to swinging of the rear arm 3 can be avoided as far as possible even if the wiring 9 is increased in outer diameter to be decreased in durability to bending.

Also, the rear arm 3 comprises the constituent member 3A extending longitudinally of the two-wheeler 1 as described above, the constituent member 3B unitarily fixed to the constituent member 3A toward the front end of the rear arm 3, and the constituent member 3C unitarily fixed to the constituent member 3A toward the rear end of the rear arm 3.

And the rear arm 3 is configured such that, when the constituent member 3B and the constituent member 3C are mounted to the constituent member 3A, one end side (an end side positioned toward the front of the two-wheeler 1) of a cover member 23 positioned between the constituent member 3B and the constituent member 3C is interposed between the constituent member 3A and one end side of the constituent member 3B and the other end side (an end side positioned toward the rear of the two-wheeler 1) of the cover member 23 is interposed between the constituent member 3A and one end side of the constituent member 3C (see Figs. 5 to 7).

An opening extending longitudinally of the constituent member 3A is formed on one side of the constituent member 3A with a front end side of the opening being closed by the constituent member 3B as described above and a rear end side of the opening being closed by the constituent member 3C. However, the opening positioned at an intermediate portion of the constituent member 3A is not closed by the constituent members 3B, 3C, in which state ribs 3D provided in the constituent member 3A for reinforcement of the rear arm 3 can be seen from outside of the rear arm 3 to produce a possibility that attractiveness of an outward appearance of the two-wheeler 1 is marred, and the wiring 9 passing through the constituent member 3A is exposed to produce a possibility that a small stone or the like flipped during traveling of the two-wheeler 1 damages the wiring 9.

Hereupon, the cover member 23 is provided on the rear arm 3 to close the opening at the intermediate portion of the constituent member 3A. However, since the cover member 23 is interposed between and fixed by the respective constituent members 3A, 3B, 3C, fasteners (for example, bolts) for fixation of the cover member 23 is dispensed with. Also, since there is no need of using such fasteners, it is possible to reduce manhour required for fixation of the cover member 23.

Also, as described above, the main stand 5 used when the two-wheeler 1 is stopped is provided on the two-wheeler 1 forwardly of and in the vicinity of the power unit 11 and below the main frame MF1 (for example, a lower side of the rear arm 3) of the two-wheeler 1 (see Fig. 1).

That is, the base end of the main stand 5 engages the rear arm 3 on the lower side of the rear arm 3 and the main stand 5 is pivotally provided on the rear arm 3. Also, the engagement between the main stand 5 and the rear arm 3 is provided forwardly of the power unit 11 and the rotating electrical machine 7.

Provided on the main stand 5 is a tension spring 25 for lifting and holding the main stand 5 (see Figs. 3 and 4). And when the main stand 5 is turned and lifted, the tip ends of the main stand 5 forming the respective grounding portions 5A, 5B are lifted toward the rear of the two-wheeler 1 (see Figs. 1 and 5).

Also, in order to lessen a shock caused when the main stand 5 is lifted, an abutment 27 is provided on an intermediate portion between the base end and tip ends of the main stand 5 to abut against a portion 29 being abutted (see Fig. 2), provided on the lower side of the rear arm 3 when the main stand 5 is lifted. In addition, it is desired that at least one of the abutment 27 and the portion 29 being abutted be made of an elastic material such as hard rubber or the like in order to lessen a shock caused when the both abut against each other.

And, as shown in Fig. 1, when the two-wheeler 1 gets over a difference DL1 in level of roads in a state, in which the main stand 5 is lifted, the rear wheel RW1 hits the difference DL1 earlier than the rear arm 3 in the case where the difference DL1 lengthens in a direction perpendicular to a plane of Fig. 1, so that the rear arm 3, the rotating electrical machine 7 and the power unit 11 provided inside the rear arm are little damaged.

In the case where the difference DL1 is not continuously provided in a direction substantially perpendicular to the plane of Fig. 1, for example, the difference DL1 does not contact with the rear wheel RW1 but contacts only with the rear arm 3 provided laterally of the rear wheel RW1 when the two-wheeler 1 advances in a state, in which the main stand 5 is lifted, however, there is a possibility that the difference DL1 contacts directly with the rear arm 3, on which the power unit 11 is provided.

And such contact causes a possibility that the rotating electrical machine 7 and the power unit 11, which are comparatively expensive as compared with other parts constituting the two-wheeler 1, are damaged, but the main stand 5 comes into contact with the difference DL1 earlier than the rear arm 3 since the main stand 5 is provided forwardly of and in the vicinity of the power unit 11 on the two-wheeler 1.

Accordingly, when the two-wheeler 1 gets over the difference DL1, a possibility that the rotating electrical machine 7 and the power unit 11 are damaged can be avoided as far as possible.

Also, when the abutment 27 of the main stand 5 and the portion 29 being abutted, of the main arm 3 are made of an elastic material, the striking energy generated when the main stand 5 contacts with the difference DL1 is absorbed by the abutment 27 and the portion 29 being abutted, so that it is possible to further avoid the possibility that the rotating electrical machine 7 and the power unit 11 are damaged.

In addition, in the case where the two-wheeler 1 gets over respective differences DL2, DL3 shown in Fig. 1, the possibility that the rotating electrical machine 7 and the power unit 11 are damaged can also be avoided in the same manner as the case with the difference DL1.

Also, the two-wheeler 1 comprises the rear cushion RC1 between the main frame MF1 provided with the saddle SD1 and the rear arm 3, and the connection of the rear arm 3 and the rear cushion RC1 is provided in a position (for example, a position slightly forwardly of a position, in which the power unit 11 is provided) clear of a position, in which the power unit 11 is mounted (see Fig. 2).

That is, the provision of the power unit 11 permits one end side of the rear cushion RC1 to engage with the rear arm 3 in a position clear of that portion of the rear arm 3, in which reinforcement ribs cannot be provided. In addition, that portion of the rear arm 3, with which the rear cushion RC1 engages, is provided therein with the ribs 3D for reinforcement as shown in Figs. 2 and 5.

Accordingly, the rear arm 3 can support the rear cushion RC1 without the provision of separate reinforcement ribs on an outside of the rear arm 3 in a position, in which the power unit 11 is provided.

Also, since any ribs are not provided on the outside of the rear arm 3, an air flows smoothly on the outside (in particular, an outside of that portion, in which the power unit 11 is provided) of the rear arm 3 during traveling of the two-wheeler 1 to be able to efficiently cool the power unit 11, which is liable to generate heat, and since any ribs are not provided on the outside of the rear arm 3, it is possible to form a outward neat appearance in design.

Further, since the engagement between the rear arm 3 and the rear cushion RC1 is positioned away from the power unit 11, heat generated from the power unit 11 is hard to reach the engagement between the rear arm 3 and the rear cushion RC1, so that even when an elastic material such as rubber or the like, susceptible to heat is used for the engagement, deterioration of the elastic material due to heat can be prevented as far as possible.

According to the invention and as described above, there is produced an effect that in a rear arm for two-wheelers, a front end side of which is pivotally supported on a main frame of a two-wheeler, a rear end side of which extends rearward to rotatably support a rear wheel, on which a rotating electrical machine is provided in the vicinity of the rear wheel to drivingly rotate the rear wheel, and in which a power unit for drivingly controlling the rotating electrical machine is provided in the vicinity of the rotating electrical machine, wiring can be easily made to the power unit from a battery provided outside the rear arm without the provision of a through-hole having a larger inner diameter than an outer diameter of a coupler provided on one end of a wiring to detachably connect one end of the wiring to the battery, when wiring is made between the power unit provided inside the rear arm and the battery provided outside the rear arm. That is, it is possible to decrease as far as possible an inner diameter of the through-hole provided in the rear arm to pass therethrough the wiring.

Also, according to the invention, there is produced an effect that it is possible to reinforce that portion of the rear arm, in which a power unit for drivingly controlling a rotating electrical machine for driving a rear wheel of a two-wheeler is provided, without the provision of any separate reinforcement ribs outside the rear arm.

Further, according to the invention, there is produced an effect in a two-wheeler having the rear arm that it is possible to reduce an amount of swinging of the wiring caused by swinging of the rear arm.

As described above, a rear arm for two-wheelers is provided, a front end side of which is pivotally supported on a main frame of a two-wheeler, a rear end side of which extends rearward to rotatably support a rear wheel, on which a rotating electrical machine is provided in the vicinity of the rear wheel to drivingly rotate the rear wheel, and in which a power unit for drivingly controlling the rotating electrical machine is provided in the vicinity of the rotating electrical machine, and which can make wiring to the power unit from a battery without the provision of a through-hole having a larger inner diameter than an outer diameter of a coupler provided on one end of a wiring to detachably connect the wiring to the battery, when wiring is made between the power unit provided inside the rear arm and the battery provided outside the rear arm.

Also, a rear arm is provided capable of reinforcing rigidity in the portion of the rear arm, in which a power unit for drivingly controlling a rotating electrical machine for driving a rear wheel of a two-wheeler is provided, without the provision of any separate reinforcement ribs outside the rear arm.

Furthermore, a two-wheeler is provided having a rear arm and capable of reducing an amount of swinging of the wiring caused by swinging of the rear arm.

In particular, a rear arm for two-wheelers is provided, the rear arm being pivotally supported at a front end side thereof on a main frame of the two-wheeler, in which a rear wheel is driven by a rotating electrical machine, and mounting the rotating electrical machine on a rear end side thereof, characterized in that the front end side of the rear arm is divided into a plurality of constituent members, and a notch is provided at the divided portion on the constituent member to form an opening for passage therethrough of a wiring for electric connection of an electric power source provided on a side of the main frame and the rotating electrical machine.

Therein, the opening is provided in the vicinity of an axis of turning on the front end side to be disposed upward when the rear arm of the two-wheeler is mounted on the two-wheeler, and a grommet is provided on the opening to protect the wiring and to fill up a gap produced between the wiring and the opening.

Moreover, a rear arm for two-wheelers is provided, the rear arm being pivotally supported at a front end side thereof on a main frame of the two-wheeler, in which a rear wheel is driven by a rotating electrical machine, and mounting the rotating electrical machine on a rear end side thereof, characterized in that the rear end side of the rear arm is divided into a member extending lengthwise from the front end side to the rear end side to constitute the rear arm, and a member which constitutes the rear arm on the rear end side, and the respective members are joined together to reinforce the rear end side of the rear arm.

Also, a two-wheeler is provided in which a rotating electrical machine provided in the vicinity of a rear wheel drivingly rotates the rear wheel, the two-wheeler comprising a rear arm, which extends toward the rear wheel from a main frame of the two-wheeler to be pivotally supported at a front end side thereof on the main frame, and a rear end side of which supports the rotating electrical machine and rotatably supports the rear wheel; a battery provided on the main frame to serve as an electric power source for the rotating electrical machine; and a wiring, through which electric power is supplied to the rotating electrical machine from the battery; wherein the wiring extending from the battery enters inside the rear arm from outside in a position, in which the wiring is decreased in amounts of extension and contraction when the rear arm turns.

Therein, the position, in which the wiring enters inside the rear arm from outside, is in the vicinity of an axis of turning on the front end side of the rear arm to be disposed on an upper side of the rear arm.

As described before, in order to provide a rear arm for two-wheelers to enable easily providing wiring from a battery provided outside the rear arm to a power unit provided inside the rear arm without the provision of a through-hole on the rear arm, having a larger inner diameter than an outer diameter of a coupler when wiring is to be provided from the battery to the power unit, a rear arm 3 being pivotally supported at a front end side thereof to a main frame of a two-wheeler 1, in which a rear wheel is driven by a rotating electrical machine 7, and mounting the rotating electrical machine 7 on a rear end side thereof, the front end side of the rear arm 3 being divided into a plurality of constituent members, and a notch being provided at the divided portion on the constituent member to form an opening for passage therethrough of a wiring for electric connection of an electric power source provided on a side of the main frame and the rotating electrical machine 7.

## Claims

1. A rear arm for two-wheelers (1), the rear arm (3) being pivotally connectable at a front end side thereof to a main frame (MF1) of the two-wheeler (1), in which a rear wheel (RW1) is driveable by a rotating electrical machine (7), being mountable to a rear end side of the rear arm (3), wherein
the front end side of the rear arm (3) is divided at least into a first constituent member (3A) and a second constituent member (3B),
the first constituent member (3A) comprises a space therein and an opening toward the second constituent member (3B) and the second constituent member (3B) comprises a space therein and an opening toward the first constituent member (3A), thereby the respective openings of the first and second constituent members (3A, 3B) close each other , wherein the space in the rear arm (3) is substantially separated at the front end of the rear arm (3) from outside by the first constituent member (3A) and the second constituent member (3B),
the second constituent member (3B) is fixed to the first constituent member (3A), and
a through hole (17) is provided forming a passage for a wiring for an electric connection (9) of an electric power source (BR1) provided on a side of the main frame (MF1) and the rotating electrical machine (7),
**characterized in that**
said through hole (17) is provided at the division of the first and second constituent members (3A, 3B) in at least one of the constituent members (3A,3B), and
said through hole is formed as a notch (15) extending from the space defined inside the rear arm (3) to outside of the rear arm (3).

2. Rear arm according to claim 1, **characterized in that** said through hole (17) is provided in the vicinity of an axis of turning on the front end side of the rear arm (3) in an upward oriented manner when the rear arm (3) of the two-wheeler (1) is mounted on the two-wheeler (1).

3. Rear arm according to claim 1 or 2, **characterized in that** a grommet (19) is provided on the opening protecting the wiring (9) and filling up a gap provided between the wiring (9) and the opening.

4. Rear arm according to at least one of the claims 1 to 3, **characterized in that** the rear end side of the rear arm (3) is divided into a plurality of constituent members (3A,3C).

5. Rear arm according to at least one of the claims 1 to 4, **characterized in that** the rear end side of the rear arm (3) is divided into a member (3A) extending lengthwise from the front end side to the rear end side and a member (3C) extending at the rear end side of the rear arm only, wherein the respective members (3A,3C) are joined together to reinforce the rear end side of the rear arm (3).

6. A two-wheeler comprising a main frame (MF1) with a front wheel (FW1) being turnably connected thereto and a rear arm (3) extending towards a rear wheel (RW1) from the main frame (MF1), the rear arm (3) comprising the features of at least one of the claims 1 to 5.

7. Two-wheeler according to claim 6, **characterized by** a battery (BR1) being provided on the main frame (MF1) to serve as an electric power source for the rotating electrical machine (7) driving the rear wheel (RW1).

8. Two-wheeler according to claim 7, **characterized by** further comprising a wiring (9) through which electric power is supplied to the rotating electrical machine (7) from the battery (BR1) and wherein the wiring (9) extending from the battery (BR1) enters inside the rear arm (3) from outside in a position, in which the wiring is decreased in amounts of extension or contraction when the rear arm (3) turns at its front end side.

9. Two-wheeler according to claim 8, **characterized in that** the position, in which the wiring (9) enters inside the rear arm (3) from outside, is in the vicinity of an axis of turning on the front end side of the rear arm (3) to be disposed on an upper side of the rear arm (3).

## Patentansprüche

1. Hinterarm für Zweiräder (1), wobei der Hinterarm (3) schwenkbar an einer vorderen Endseite desselben mit einem Hauptrahmen (MF1) des Zweirades (1) verbindbar ist, in dem ein Hinterrad (RW1) durch eine rotierende elektrische Maschine, die an einer hinteren Endseite des Hinterarms (3) montierbar ist, antreibbar ist, wobei
die vordere Endseite des Hinterarms (3) in zumindest in ein erstes Bauteil (3A) und ein zweites Bauteil (3B) geteilt ist,
das erste Bauteil (3A) darin einen Raum und eine Öffnung in Richtung zu dem zweiten Bauteil (3B) aufweist und das zweite Bauteil (3B) darin einen Raum und eine Öffnung in Richtung zu dem ersten Bauteil (3A) aufweist, wodurch die jeweiligen Öffnungen des ersten und zweiten Bauteils (3A, 3B) nah beieinander sind, wobei der Raum in dem Hinterarm (3) im Wesentlichen an dem vorderen Ende des Hinterarms (3) nach außen durch das erste Bauteil (3A) und das zweite Bauteil (3B) getrennt ist,
das zweite Bauteil (38) an dem ersten Bauteil (3A) befestigt ist und
eine Durchgangsöffnung (17) vorgesehen ist, die einen Kanal für eine Kabelführung für eine elektrische Verbindung (9) einer elektrischen Antriebsquelle (BR1) bildet, vorgesehen auf einer Seite des Hauptrahmens (MF1) und der rotierenden elektrischen Maschine (7),
**dadurch gekennzeichnet, dass**
die Durchgangsöffnung (17) an der Trennung des ersten und zweiten Bauteils (3A, 3B) in zumindest einem der bildenden Teile (3A, 3B) vorgesehen ist, und
die Durchgangsöffnung als eine Kerbe (15) gebildet ist, die sich von dem Raum, gebildet innerhalb des Hinterarms (3) zur Außenseite des Hinterarms (3) erstreckt.

2. Hinterarm nach Anspruch 1, **dadurch gekennzeichnet, dass** die Durchgangsöffnung (17) in der Nähe einer Drehachse an der vorderen Endseite des Hinterarms (3) in einer nach oben ausgerichteten Weise vorgesehen ist, wenn der Hinterarm (3) des Zweirades (1) an dem Zweirad (1) montiert ist.

3. Hinterarm nach Anspruch 1 oder 2, **dadurch gekennzeichnet, dass** eine Durchführungshülse (19) an der Öffnung vorgesehen ist, die die Kabelführung (9) schützt und einen Spalt ausfüllt, der zwischen der Kabelführung (9) und die Öffnung vorgesehen ist.

4. Hinterarm nach zumindest einem der Ansprüche 1 bis 3, **dadurch gekennzeichnet, dass** die hintere Endseite des Hinterarmes (3) in eine Mehrzahl von Bauteilen (3A, 3B) geteilt ist.

5. Hinterarm nach zumindest einem der Ansprüche 1 bis 4, **dadurch gekennzeichnet, dass** die hintere Endseite des Hinterarms (3) geteilt wird in ein Teil (3A), das sich längs von der vorderen Endseite zu der hinteren Endseite und einem Teil (3C), das sich nur er hinteren Endseite des Hinterarms erstreckt, geteilt ist, wobei die jeweiligen Teile (3A, 3C) miteinander verbunden sind, um die hintere Endseite des Hinterarmes (3) zu verstärken.

6. Zweirad, mit einem Hauptrahmen (MF1) mit einem Vorderrad (FW1), das mit diesem drehbar verbunden ist, und einem Hinterarm (3), der sich von diesem Hauptrahmen (MF1) in Richtung zu einem Hinterrad (RW1) erstreckt, wobei der Hinterarm (3) die Merkmale von zumindest einem der Ansprüche 1 bis 5 aufweist.

7. Zweirad nach Anspruch 6, **gekennzeichnet durch** eine Batterie (BR1), die an dem Hauptrahmen (MF1) vorgesehen ist, um als eine elektrische Antriebsquelle für die Rotation der elektrischen Maschine (7) zu dienen, die das Hinterrad (RW1) antreibt.

8. Zweirad nach Anspruch 7, **gekennzeichnet durch** außerdem aufweisend eine Verkabelung (9), **durch** die elektrische Energie zu der rotierenden elektrischen Maschine (7) von der Batterie (BR1) zugeführt wird und wobei die Verkabelung (9), die sich von der Batterie (BR1) erstreckt, in den Hinterarm (3) von außen zu einer Position eintritt, in der die Verkabelung im Betrag ihrer Verlängerung oder Verkürzung vermindert ist, wenn sich der Hinterarm (3) an seiner vorderen Endseite dreht.

9. Zweirad nach Anspruch 8, **dadurch gekennzeichnet, dass** die Position, in der die Verkabelung (9) in das innere des Hinterarms (3) von außen eintritt, in der Nähe einer Drehachse an der vorderen Endseite des Hinterarmes (3) ist, um an einer Oberseite des Hinterarms (3) angeordnet zu sein.

## Revendications

1. Bras arrière pour deux-roues (1), le bras arrière (3) pouvant être raccordé de manière pivotante à un côté d'extrémité avant de celui-ci à un châssis principal (MF1) du deux-roues (1), dans lequel une roue arrière (RW1) peut être entraînée par une machine électrique rotative (7), pouvant être montée sur un côté d'extrémité arrière du bras arrière (3), dans lequel :
le côté d'extrémité avant du bras arrière (3) est divisé au moins en un premier élément constituant (3A) et un second élément constituant (3B),
le premier élément constituant (3A) comprend un espace à l'intérieur de celui-ci et une ouverture vers le second élément constituant (3B) et le second élément constituant (3B) comprend un espace à l'intérieur de celui-ci et une ouverture vers le premier élément constituant (3A), moyennant quoi les ouvertures respectives des premier et second éléments constituants (3A, 3B) se referment mutuellement, dans lequel l'espace dans le bras arrière (3) est sensiblement séparé à l'extrémité du bras arrière (3) de l'extérieur par le premier élément constituant (3A) et le second élément constituant (3B),
le second élément constituant (3B) est fixé sur le premier élément constituant (3A), et
un trou traversant (17) est prévu pour former un passage pour un câblage pour un raccordement électrique (9) d'une source de puissance électrique (BR1) prévue sur un côté du châssis principal (MF1) et de la machine électrique rotative (7),
**caractérisé en ce que** :
ledit trou traversant (17) est prévu à la séparation des premier et second éléments constituants (3A, 3B) dans au moins l'un des éléments constituants (3A, 3B), et
ledit trou traversant est formé comme une encoche (15) s'étendant à partir de l'espace défini à l'intérieur du bras arrière (3) jusqu'à l'extérieur du bras arrière (3).

2. Bras arrière selon la revendication 1, **caractérisé en ce que** ledit trou traversant (17) est prévu à proximité d'un axe de rotation sur le côté d'extrémité avant du bras arrière (3) d'une manière orientée vers le haut lorsque le bras arrière (3) du deux-roues (1) est monté sur le deux-roues (1).

3. Bras arrière selon la revendication 1 ou 2, **caractérisé en ce qu'**un passe-fil (19) est prévu sur l'ouverture protégeant le câblage (9) et remplissant un espace prévu entre le câblage (9) et l'ouverture.

4. Bras arrière selon au moins l'une des revendications 1 à 3, **caractérisé en ce que** le côté d'extrémité arrière du bras arrière (3) est divisé en une pluralité d'éléments constituants (3A, 3C).

5. Bras arrière selon au moins l'une des revendications 1 à 4, **caractérisé en ce que** le côté d'extrémité arrière du bras arrière (3) est divisé en un élément (3A) s'étendant dans le sens de la longueur à partir du côté d'extrémité avant jusqu'au côté d'extrémité arrière et un élément (3C) s'étendant du côté d'extrémité arrière du bras arrière uniquement, dans lequel les éléments (3A, 3C) respectifs sont assemblés pour renforcer le côté d'extrémité arrière du bras arrière (3).

6. Deux-roues comprenant un châssis principal (MF1) avec une roue avant (FW1) qui y est raccordée de manière rotative et un bras arrière (3) s'étendant vers une roue arrière (RW1) à partir du châssis principal (MF1), le bras arrière (3) comprenant les caractéristiques d'au moins l'une des revendications 1 à 5.

7. Deux-roues selon la revendication 6, **caractérisé par** une batterie (BR1) qui est prévue sur le châssis principal (MF1) pour servir de source de puissance électrique pour la machine électrique rotative (7) qui entraîne la roue arrière (RW1).

8. Deux-roues selon la revendication 7, **caractérisé en ce qu'**il comprend en outre un câblage (9) par l'intermédiaire duquel la puissance électrique est alimentée à la machine électrique rotative (7) à partir de la batterie (BR1) et dans lequel le câblage (9) s'étendant à partir de la batterie (BR1) pénètre à l'intérieur du bras arrière (3) à partir de l'extérieur dans une position dans laquelle le câblage diminue du point de vue des quantités d'extension ou de contraction lorsque le bras arrière (3) tourne à son côté d'extrémité avant.

9. Deux-roues selon la revendication 8, **caractérisé en ce que** la position dans laquelle le câblage (9) pénètre à l'intérieur du bras arrière (3) à partir de l'extérieur, est à proximité d'un axe de rotation sur le côté d'extrémité avant du bras arrière (3) destiné à être disposé sur un côté supérieur du bras arrière (3).
